# EUROPEAN PATENT APPLICATION

(11) **EP 1 113 353 A2**
(43) Date of publication of application: **04.07.2001**
(21) Application number: 00311050.9
(22) Date of filing: 12.12.2000
(51) Int. Cl.: G06F 1/12

(54) **An apparatus and method for facilitating the efficient capture of signals originating in a fast clock domain by a circuit in a slow clock domain**

(30) Priority: 16.12.1999 US 172305 P
(71) Applicant: Texas Instruments Incorporated, Dallas, Texas 75251 (US)
(72) Inventor: Samuel, Roshan Jacob, Richardson, Texas 75081 (US); Christison, Gregory, McJinney, Texas 75070 (US)
(74) Representative: Nettleton, John Victor

(57) **Abstract**

An apparatus and method for facilitating the capture of signals originating in a fast clock domain by a circuit in a slow clock domain utilizes a synchronizer (10) to synchronize the slow clock to the fast clock domain, a transition detectbr (20) to detect a transition in the state of the signal from the synchronizer, and a signal generator (30) which responds to the signal from the transition detector to generate a stretched signal.

## Description

This invention relates in general to the field of electronic circuits and more particularly to an apparatus for facilitating the capture of signals originating in a fast clock domain by a circuit in a slow clock domain.

The design of circuits heretofore known that facilitate the capturing of a signal originating in a faster clock domain by a circuit in a slower clock domain has proven to be more inadequate than necessary. The problem with these circuits is that if the ratio of the faster clock frequency to the slower clock frequency is not known, or is not a constant, the circuit will be slower than is necessary, or the circuit in the slower clock domain will not see the signal originating in the faster clock domain.

The usual approach taken in these circuits is to stretch the pulses of the signal originating in a faster clock domain long enough so that the slower clock domain will be able to capture the pulse. Often, the pulses of the signal in the fast clock domain are stretched more than necessary to ensure that the signal is properly captured by the circuit in the slow clock domain. When these pulses are stretched arbitrarily, the result is an unnecessary delay in the capturing of the signal originating in the fast clock domain.

Therefore the need had arisen for an apparatus to facilitate the efficient capture of signals originating in a fast clock domain by a circuit in a slow clock domain which reduces the delay associated with the devices identified above.

In accordance with the present invention, an apparatus and method for facilitating the capture of signals originating in a fast clock domain by a circuit in a slow clock domain are provided, which substantially reduce disadvantages and problems associated with circuits and methods heretofore known.

According to one aspect of the present invention, an apparatus for facilitating the capture of signals generated by a circuit operating in a fast clock domain in a circuit operating in a slow clock domain, comprises:
a synchronizer for synchronizing a slow clock to the fast clock domain and producing a synchronized signal; and
a transition detector for detecting a transition in the state of the synchronized signal and producing a signal in response thereto for input to the fast clock domain signal generating circuit to produce a pulse stretched signal.

An example thereof is an apparatus for facilitating the capturing of signals originating in a fast clock domain by a circuit in a slow clock domain which comprises a synchronizer to synchronize the slow clock to the fast clock domain, a transition detector to detect a transition in the state of the signal from the synchronizer, and a fast clock domain signal generating circuit, such as a signal generator, which responds to the signal from the transition detector to generate a pulse stretched signal.

In another example thereof, the synchronizer comprises a first D flip flop to receive the signal from the slow clock and a second D flip flop coupled to the first D flip flop. The second D flip flop prevents any metastability in the fast clock domain.

The transition detector comprises a D flip flop to receive the synchronized signal from the Q output of the second D flip flop in the synchronizer, and an AND gate coupled to the Q output of the D flip flop in the transition detector and the Q_{b} output of the second D flip flop in the synchronizer. The output of the AND gate, which is also the output of the transition detector, is a signal which tracks the negative transitions of the synchronized signal from the synchronizer. The output of the transition detector is then inputted into a signal generator along with the fast clock to generate a pulse stretched signal.

The present invention also contemplates embodiments in which the Q_{b} output of the D flip flop in the transition detector and the Q output of the second D flip flop in the synchronizer are coupled to the AND gate located within the transition detector. The output of the AND gate then becomes a signal which tracks the positive transitions of the synchronized signal from the synchronizer. Alternatively, a first AND gate, a second AND gate, and an OR gate can be included within the transition detector to form a transition detector which tracks both negative and positive transitions in the state of the synchronized signal from the synchronizer.

In another embodiment, a divider is added to the synchronizer, transition detector, and the signal generator.

The divider divides the slow clock before it is inputted to the synchronizer and effectively stretches the slow clock. The divider ensures that the input to the synchronizer will accurately track one complete cycle of the slow clock.

It is also contemplated that an apparatus of the present invention may include a slow clock block to receive the output of the signal generator and the signal from the slow clock. The slow clock block is to generate a signal in the slow clock domain which tracks the signal originating in the fast clock domain.

The present invention also provides a method for facilitating the capture of signals from a fast clock domain in a slow clock domain, comprising:
synchronizing a slow clock to a fast clock domain;
detecting a transition in the state of the synchronized signal; and
generating a pulse stretched signal in response to the transition detected signal.

In one example, the method includes synchronizing the slow clock into the fast clock domain, detecting a transition in the state of the synchronized signal, and generating a pulse stretched signal responsive to the output of the transition detector.

The apparatus and method for facilitating the capture of a signal from a fast clock domain to a circuit in a slow clock domain provide a number of important technical advantages. The present invention allows a signal originating in a fast clock domain to be efficiently captured by a circuit in a slower clock domain without prior knowledge of the ratio of the faster clock frequency to the slower clock frequency. Another technical advantage of the present invention is that it allows the efficient capture of a signal whether or not the ratio of the slower clock frequency to the faster clock frequency is constant or variable.

Ways of carrying out the invention will now be described, by way of example only, with reference to the accompanying drawings, in which like reference numbers indicate like features and wherein:
FIGURE 1 is a schematic diagram of an apparatus for facilitating the efficient capture of signals originating in a fast clock domain by a circuit in a slow clock domain according to the present invention;
FIGURE 2 is a schematic diagram of another embodiment of the present invention with digital circuit components explicitly illustrated;
FIGURE 3 is a schematic diagram of another embodiment of the present invention with digital circuit components explicitly illustrated;
FIGURE 4 is a schematic diagram of another embodiment of the present invention with digital circuit components explicitly illustrated;
Figure 5 is a schematic diagram of another embodiment of the present invention including a divider;
Figure 6 is a schematic diagram of another embodiment of the present invention with digital circuit components explicitly illustrated and including a divider;
Figure 7 is a schematic diagram of another embodiment of the present invention including a divider and a slow clock block; and
Figure 8 is a schematic diagram of another embodiment of the present invention with digital circuit components explicitly illustrated and including a divider and a slow clock block.

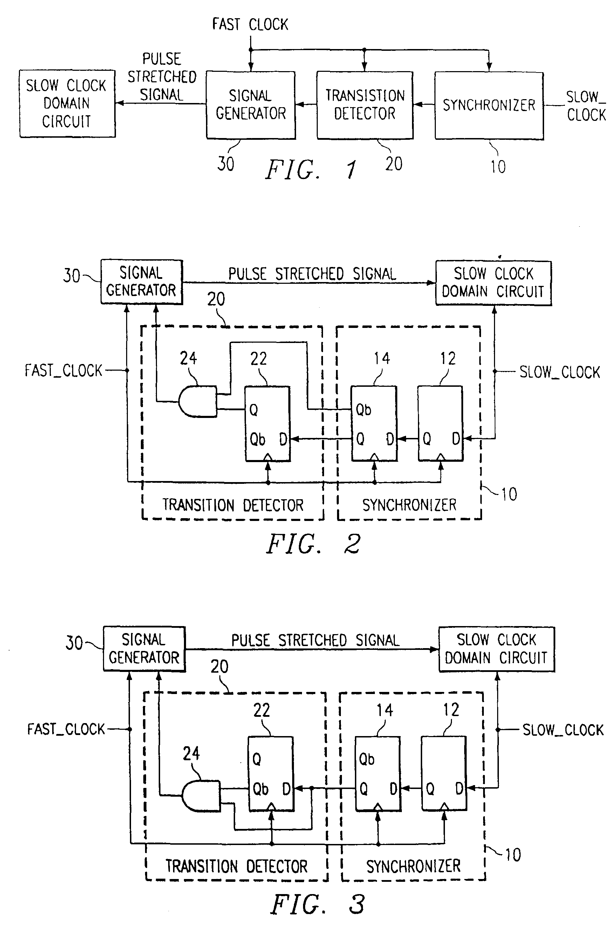

Referring to the accompanying drawings, FIGURE 1 illustrates an apparatus for capturing signals originating from a faster clock domain in a circuit in a slower clock domain that includes a synchronizer 10, a transition detector 20, and a signal generator 30. Synchronizer 10 receives a slow clock and synchronizes this slow clock to the fast clock domain. The transition detector 20 receives the output signal from the synchronizer and detects transitions occurring in this synchronized signal. The output signal of the transition detector 20 and a fast clock are coupled to the signal generator 30. The signal generator 30 generates a pulse stretched signal responsive to the output signal of the transition detector 20.

FIGURE 2 illustrates another embodiment of the present invention. Synchronizer 10 includes a D flip flop 12 that receives the slow clock. The Q output of D flip flop 12 is coupled to a second D flip flop 14. The second D flip flop 14 prevents metastability from occurring in the fast clock domain. Both flip flops are clocked by the fast clock. In general, synchronizer 10 can be any device which allows a signal from a slow clock domain to be synchronized into a faster clock domain.

The transition detector 20 receives the Q and Q_{b} outputs of the second D flip flop 14 within synchronizer 10. The transition detector 20 includes a clocked D flip flop 22 and an AND gate 24. The D flip flop 22 is clocked by the fast clock. The D flip flop 22 directly receives the Q output of the second D flip flop 14 of the synchronizer 10 and the AND gate 24 receives the Q_{b} output of the second D flip flop 14. The AND gate 24 also receives the Q output of D flip flop 22. The AND gate 24 performs a binary AND function on the signal received from the Q_{b} output of the D flip flop 14 and the signal received from the Q output of D flip flop 22. The output of AND gate 24 is a signal which tracks the negative transitions in the state of the synchronized signal from the synchronizer 10 effectively making transition detector 20 a negative transition detector.

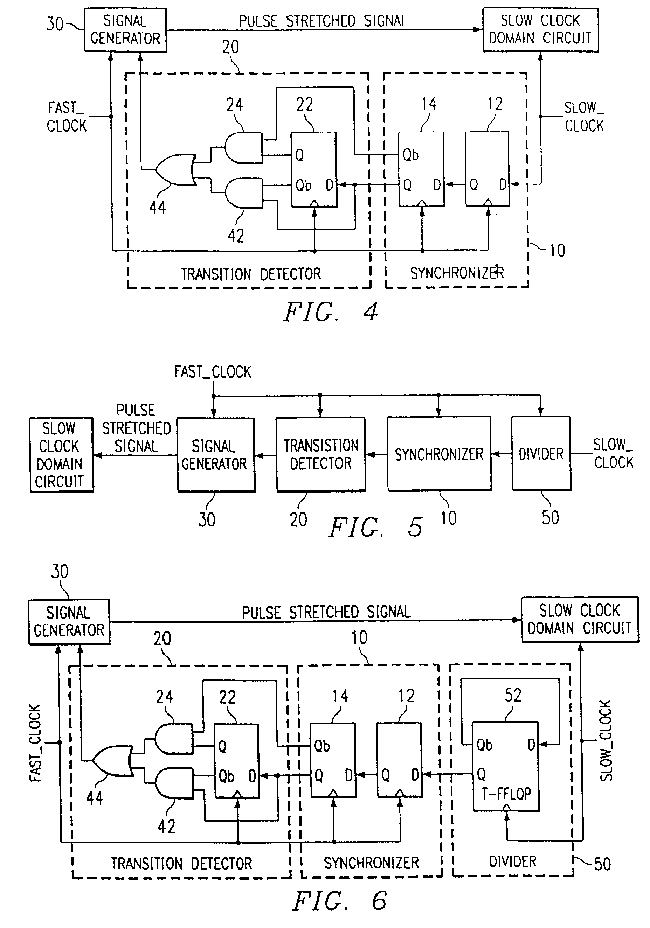

Alternatively, as shown in Figure 3, the AND gate 24 can receive the Q output of the second D flip flop 14 and the Q_{b} output of D flip flop 22 to make transition detector 20 a positive transition detector which tracks the positive transitions in the state of the synchronized signal from the synchronizer 10. Additionally, as shown in Figure 4, a first AND gate 24, a second AND gate 42, and an OR gate 44 can be included within the transition detector 20 along with D flip flop 22 to form a transition detector which tracks both positive and negative transitions in the state of the synchronized signal from synchronizer 10. In this embodiment, the first AND gate 24 receives the Qb output of D flip flop 14 and receives the Q output of D flip flop 22. The second AND gate 42 receives the Q output of D flip flop 14 and receives the Q_{b} output of D flip flop 22. The OR gate 44 receives the output of the first AND gate 24 and the second AND gate 42. The OR gate performs a binary OR function on the two inputs it receives. The output of OR gate 44 is the output of transition detector 20.

With reference to Figures 1-4, the output of the transition detector 20 is then inputted into a signal generator 30 along with the fast clock to produce a stretched pulse signal. In the embodiments depicted in Figures 1 to 4, the signal generator 30 changes the state of the stretched pulse signal only after at least two transitions of the signal from the transition detector 20 occurs. This ensures that the signal generator 30 does not prematurely trigger a change in the state of the pulse stretched signal by requiring at least one complete slow clock cycle, which consists of one positive transition and one negative transition of slow clock, to occur before the signal generator 30 triggers a change in the state of the pulse stretched signal. The signal generator 30 can be any device running in a fast clock domain that needs to send a signal to a slower clock domain and is capable of modifying its output signal according to the signal from the transition detector 20.

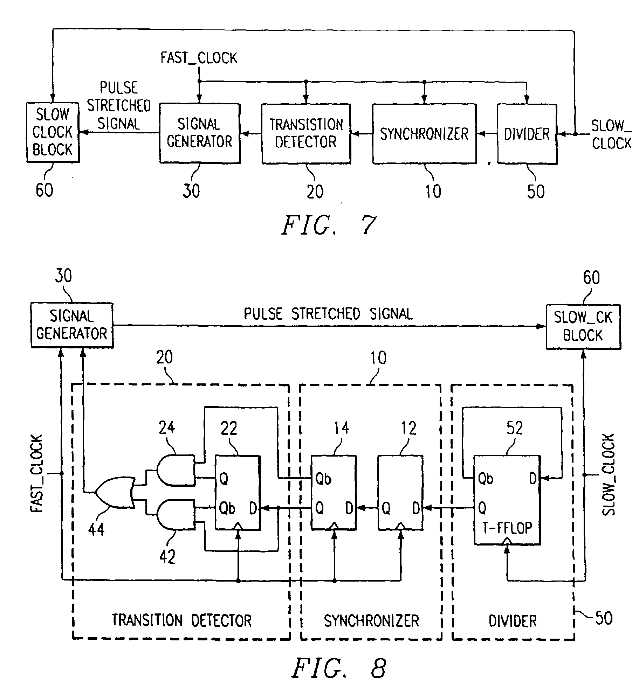

In Figure 5, a divider 50 is added to the apparatus for facilitating the capturing of signals originating in a fast clock domain by a circuit in a slow clock domain. The divider 50 eliminates the need for the signal generator 30 to wait for at least two transitions in the state of the signal from the transition detector 20 to occur before it triggers a change in the state of the pulse stretched signal. The divider 50 divides the slow clock by two to stretch the pulses of the output signal of the divider 50 over a full cycle of the slow clock. This ensures that at least one positive and one negative transition in the state of slow clock occurs. Once the divider 50 receives the signal from the slow clock and divides it by two, the divided output signal of the divider is then received by the synchronizer 10 which synchronizes this signal to the fast clock domain. The divider can also divide the slow clock by one which requires the signal generator 30 to wait for at least two transitions in the state of the signal from the transition detector 20 to occur before it triggers a change in the state of the pulse stretched signal as in the embodiment without the divider. Figure 6 illustrates an embodiment of the present invention with the divider 50 comprising a single T flip flop 52.

In Figure 7, a slow clock block 60 is added to the present embodiment. The slow clock block 60 receives the output of the signal generator 30 and the slow clock. The slow clock block 60 generates a signal in the slow clock domain which tracks the signal originating in the fast clock domain. Figure 8 illustrates an embodiment of the present invention, including the slow clock block 60, with the digital circuit components explicitly detailed.

Although the present invention has been described with respect to several embodiments, many changes, substitutions, variations, alterations, transformations, and modifications of such embodiments may be suggested to one skilled in the art. It is intended that the present invention encompass all such changes, substitutions, variations, alterations, transformations, and modifications as fall within the scope of the appended claims.

## Claims

1. An apparatus for facilitating the capture of signals generated by a circuit operating in a fast clock domain in a circuit operating in a slow clock domain, comprising:
a synchronizer for synchronizing a slow clock to the fast clock domain and producing a synchronized signal; and
a transition detector for detecting a transition in the state of the synchronized signal and producing a signal in response thereto for input to the fast clock domain signal generating circuit to produce a pulse stretched signal.

2. The apparatus of claim 1, wherein the synchronizer comprises:
a first D flip flop operable to receive the slow clock; and
a second D flip flop electrically coupled to said first D flip flop for preventing metastability in the fast clock domain.

3. The apparatus of claim 1 or claim 2, wherein the transition detector comprises:
a D flip flop operable to receive the synchronized signal from said synchronizer; and
an AND gate electrically coupled to said D flip flop and said synchronizer for combining an inverted synchronized signal from said synchronizer with an output of said D flip flop.

4. The apparatus of claim 3, wherein the said output of said D flip-flop of said transition detector is a direct output.

5. The apparatus of claim 3, wherein the said output of said D flip-flop of said transition detector is an inverted output.

6. The apparatus of claim 1 or claim 2, wherein the transition detector comprises:
a D flip flop operable to receive the synchronized signal from said synchronizer;
a first AND gate electrically coupled to said D flip flop and said synchronizer for combining an inverted synchronized signal from said synchronizer with an output of said D flip flop;
a second AND gate electrically coupled to said D flip flop and said synchronizer for combining the synchronized signal from said synchronizer with an inverted output of said D flip flop; and
an OR gate electrically coupled to said first AND gate and said second AND gate for combining the output signals of said first AND gate with said second AND gate.

7. The apparatus of any preceding claim, further comprising:
a divider to divide a signal from a slow clock.

8. The apparatus of claim 7, wherein the slow clock is divided 1 or 2 by the divider.

9. The apparatus of claim 7 or claim 8, wherein the divider comprises:
a T-flip flop operable to receive the slow clock when the slow clock is divided by two.

10. The apparatus of any preceding claim, further comprising:
a slow clock block responsive to the pulse stretched signal to generate a captured signal originating in a fast clock domain in a circuit in the slow clock domain.

11. A method for facilitating the capture of signals from a fast clock domain in a slow clock domain, comprising:
synchronizing a slow clock to a fast clock domain;
detecting a transition in the state of the synchronized signal; and
generating a pulse stretched signal in response to the transition detected signal.

12. The method of claim 11, further comprising:
dividing the slow clock prior to synchronizing the slow clock to the fast clock domain.

13. The method of claim 11 or claim 12, further comprising:
generating a captured signal in response to the pulse stretched signal.
